Europäisches Patentamt

European Patent Office

Office européen des brevets

(19)

(11) Numéro de publication : **0 287 428 B1**

(12) **FASCICULE DE BREVET EUROPEEN**

(45) Date de publication du fascicule du brevet :
24.07.91 Bulletin 91/30

(51) Int. Cl.⁵ : **C08F 14/06, C08F 2/22**

(21) Numéro de dépôt : **88400812.9**

(22) Date de dépôt : **05.04.88**

(54) Procédé de préparation en émulsion aqueuse de polymères du chlorure de vinyle sous forme de latex à particules monodispersées.

(30) Priorité : 14.04.87 FR 8705260

(43) Date de publication de la demande :
19.10.88 Bulletin 88/42

(45) Mention de la délivrance du brevet :
24.07.91 Bulletin 91/30

(84) Etats contractants désignés :
BE DE ES FR GB IT NL

(56) Documents cités :
DE-C- 889 980
GB-A- 699 016
GB-A- 991 536
US-A- 2 777 836

(73) Titulaire : **ATOCHEM**
**4 & 8, Cours Michelet La Défense 10**
**F-92800 Puteaux (FR)**

(72) Inventeur : **Grossoleil, Jacques**
**2 Impasse Lahoun Clos Montalibet**
**F-64300 Orthez (FR)**
Inventeur : **Kappler, Patrick**
**20 Allée Simon Saint-Jean**
**F-69130 Ecully (FR)**
Inventeur : **Krantz, Nicolas**
**14 Rue Gambetta**
**F-27300 Bernay (FR)**

(74) Mandataire : **Rochet, Michel et al**
**ATOCHEM Département Propriété Industrielle**
**F-92091 Paris la Défense Cédex 42 (FR)**

Jouve, 18, rue Saint-Denis, 75001 PARIS

## Description

L'invention a pour objet un procédé de préparation d'homo- et co-polymères du chlorure de vinyle sous forme de latex à particules monodispersées, et plus particulièrement de latex à grosses particules, par polymérisation en émulsion aqueuse du ou des monomères correspondants. Elle a également pour objet les latex en résultant ainsi que les homo- et co-polymères issus desdits latex.

On sait que les latex de polymères du chlorure de vinyle sont des dispersions aqueuses de particules desdits polymères dont le diamètre est généralement compris entre 0,01 et 5 μm.

Par particules "monodispersées" on entend, dans la présente description, des particules dont la répartition granulométrique présente un coefficient de polydispersité au plus égal à 0,06.

Par "grosses" particules on entend, dans la présente description, des particules dont le diamètre moyen est au moins égal à 0,5 μm.

Les latex à particules monodispersées trouvent leur intérêt dans le fait que la connaissance du diamètre moyen de leurs particules et de leur teneur en polymère permet, par le calcul, d'atteindre avec précision la valeur de la surface totale de l'interface particules/phase aqueuse.

Par polymérisation-greffage de monomères vinyliques comportant des groupes fonctionnels tels que, par exemple, —COOH, —SO$_3$, —NH$_2$, en présence desdits latex, on obtient des latex utilisables comme réactifs biologiques permettant de détecter certains états pathologiques.

Lesdits latex peuvent par ailleurs servir d'étalons dans les méthodes de mesure de diamètres au moyen de tous les appareillages scientifiques qui comportent des dispositifs de mesure de diamètres opérant dans cette gamme de valeurs (appareils d'analyses granulométriques de particules, appareils de filtration, membranes à pores calibrés).

Par mélange avec un ou plusieurs plastifiants liquides les homo- et co-polymères issus desdits latex sont évidement utilisables pour la préparation de plastisols susceptibles d'être mis en oeuvre de façon appropriée dans un grand nombre de techniques telles que notamment l'enduction, le moulage par rotation, le trempage, la projection. Il est possible d'obtenir des plastisols de comportement rhéologique déterminé avec précision, par l'emploi en mélange d'au moins deux homo- ou co-polymères issus de latex dont l'un au moins est à particules monodispersées de diamètre moyen supérieur à 0,8 μm.

On connaît des techniques de préparation d'homo- et co-polymères du chlorure de vinyle sous forme de latex à grosses particules monodispersées, par polymérisation en émulsion aqueuse du ou des monomères correspondants. Ces techniques comportent plusieurs étapes de polymérisation, chaque étape étant réalisée sous agitation modérée, en présence d'au moins un émulsifiant et d'au moins un amorceur hydrosoluble. Dans la première étape ou prépare un latex d'homo- ou co-polymère du chlorure de vinyle à particules de diamètre moyen généralement compris entre 0,1 et 0,3 μm. On sait que la répartition granulométrique des particules du latex obtenu dépend essentiellement de la nature de l'émulsifiant utilisé et de la vitesse initiale de polymérisation. C'est ainsi, par exemple, qu'utilisé en tant qu'émulsifiant, le versatate de sodium conduit, toutes choses égales par ailleurs, à des latex dont les particules présentent une répartition granulométrique d'indice de polydispersité plus faible que le myristate de sodium ou le laurate de sodium. On sait également qu'une polymérisation de vitesse initiale élevée conduit, toutes choses égales par ailleurs, à des latex dont les particules présentent une répartition granulométrique de coefficient de polydispersité plus faible qu'une polymérisation de vitesse initiale faible. L'inconvénient d'une polymérisation de vitesse initiale élevée est que la vitesse de polymérisation, étant autoaccélérée, n'est plus compatible, à taux élevé de conversion du ou des monomère(s), avec les capacités d'échanges thermiques du réacteur dans lequel a lieu la polymérisation. Il s'ensuit que, même en appliquant des conditions opératoires de polymérisation favorables à l'obtention de latex à particules présentant une répartition granulométrique de coefficient de polidispersité plus faible, ledit coefficient de polydispersité est généralement supérieur à 0,1. Dans la deuxième étape on réalise une polymérisation en émulsion ensemencée en présence, comme produit d'ensemencement, du latex issu de la première étape. On obtient un latex dont les particules ont un diamètre moyen généralement compris entre 0,3 et 0,9 μm, plus élevé que celui des particules du produit d'ensemencement mis en oeuvre, et présentent une répartition granulométrique de coefficient de polydispersité plus faible, mais encore, dans le meilleur des cas, supérieur à 0,08. Il s'ensuit que, pour obtenir un latex à grosses particules monodispersées, on est amené à réaliser plus de deux étapes de polymérisation en mettant en oeuvre, à chaque étape, à partir de la deuxième étape, comme produit d'ensemencement, le latex issu de l'étape précédente et à un taux élevé de polymère d'ensemencement. Il n'est pas rare que l'on soit obligé de réaliser quatre ou cinq étapes de polymérisation, ce qui représente des opérations longues et coûteuses, avec perte de produit à chaque étape.

Dans un article ayant pour référence : Plastics and Rubber : Materials and Applications — Mechanism of emulsifier — free emulsion polymerization of vinyl chloride — Février 1980, pages 21 à 24, J. LAAKSONEN et P. STENIUS ont décrit une technique de polymérisation du chlorure de vinyle en émulsion aqueuse qui

EP 0 287 428 B1

consiste à opérer en l'absence totale d'émulsifiant et en présence, en tant qu'amorceur hydrosoluble, de persulfate d'un métal alcalin ou d'ammonium mis en oeuvre en quantité importante. Dans cet article les auteurs décrivent les moyens qui permettent d'obtenir en une seule étape un latex de chlorure de polyvinyle à particules monodispersées de diamètre moyen compris entre 0,380 μm et 0,535 μm. Ces moyens consistent en l'addition au milieu réactionnel, avant polymérisation, d'un sel, tel que, par exemple, le chlorure de potassium, le chlorure de calcium, dont le cation, appelé contre ion, est de nature et en quantité déterminées. Le diamètre moyen des particules du latex obtenu est fonction de l'intensité d'agitation du milieu réactionnel. Il est d'autant plus élevé, toutes choses égales par ailleurs, que l'intensité d'agitation est plus élevée.

La demanderesse a constaté que la technique décrite par J. LAAKSONEN et P. STENIUS présente cependant les inconvénients suivants : la masse moléculaire du polymère obtenu dépend de l'intensité d'agitation du milieu réactionnel ; elle est d'autant plus élevée, toutes choses égales par ailleurs, que l'intensité d'agitation est plus élevée. Les latex, préparés par polymérisation en émulsion ensemencée en présence, comme produit d'ensemencement, d'un latex préparé selon ladite technique, comprennent des particules non sphériques, ce qui les rend impropres à de nombreuses applications.

Dans le brevet US 2 777 836, on a décrit un procédé de (co)polymérisation de chlorure de vinyle en présence d'un électrolyte et introduction d'un agent émulsifiant après le début de la (co)polymérisation.

Dans le brevet GB 699 016, on a décrit un procédé de (co)polymérisation de chlorure de vinyle avec introduction de l'agent émulsifiant en cours de polymérisation.

Le procédé objet de l'invention ne présente pas les inconvénients énoncés ci-dessus. Il comporte seulement une ou au plus deux étapes de polymérisation et permet d'obtenir des polymères du chlorure de vinyle sous forme de latex à particules monodispersées, et plus particulièrement de latex à grosses particules. La masse moléculaire des polymères du chlorure de vinyle préparés selon l'invention ne dépend pas de l'intensité d'agitation du milieu réactionnel. Les latex préparés selon l'invention, qu'ils soient issus de la première ou de la deuxième étape, sont exempts de particules non sphériques. Le procédé de l'invention conduit en outre à une quantité de croûtes substantiellement plus faible que celle formée lors de la mise en oeuvre de la technique d'homo- et co-polymérisation du chlorure de vinyle décrite par J. LAAKSONEN et P. STENIUS.

Selon le procédé, objet de l'invention, de préparation d'homo- et co-polymères du chlorure de vinyle sous forme d'un latex à particules monodispersées, par polymérisation en émulsion aqueuse du ou des monomères correspondants, en une ou deux étapes, on réalise la première étape en l'absence d'agent tensioactif et en présence d'au moins 0,2% et de préférence de 0,3 à 1%, en poids par rapport au(x) monomère(s), d'au moins un amorceur hydrosoluble choisi dans le groupe formé par les persulfates des métaux alcalins et le persulfate d'ammonium.

Selon le procédé de l'invention on réalise la première étape en présence également d'au moins un composé auxiliaire hydrosoluble, solvant du chlorure de vinyle et non copolymérisable avec le chlorure de vinyle, en quantité telle que la solubilité à 25°C, sous la pression atmosphérique, du chlorure de vinyle dans la phase aqueuse soit au moins égale à 1,5 g/l.

Par polymères du chlorure de vinyle on entend selon l'invention les homo- et co-polymères, ces derniers contenant au moins 50% en poids de chlorure de vinyle et au moins un monomère copolymérisable avec le chlorure de vinyle. Les monomères copolymérisables sont ceux généralement employés dans les techniques classiques de copolymérisation du chlorure de vinyle. On peut citer les esters vinyliques des acides mono- et poly-carboxyliques, tels que acétate, propionate, benzoate de vinyle, les acides insaturés mono- et poly-carboxyliques, tels que acrylique, méthacrylique, maléïque, fumarique, itaconique, ainsi que leurs esters aliphatiques, cycloaliphatiques, aromatiques, leurs amides, leurs nitriles ; les halogénures d'allyle, de vinyle, de vinylidène ; les alkylvinyléthers ; les oléfines.

Par "première" étape on désigne selon l'invention, dans un but de simplification, aussi bien l'étape du procédé en une seule étape que la première étape du procédé en deux étapes.

La demanderesse a en effet trouvé qu'il est possible, sans avoir recours à d'autres sels qu'un amorceur hydrosoluble, d'obtenir par polymérisation en émulsion aqueuse, en une étape, des polymères du chlorure de vinyle sous forme de latex à particules monodispersées de diamètre moyen compris entre 0,17 μm et 0,8 μm et de masse moléculaire indépendante de l'intensité d'agitation du milieu réactionnel, si l'on utilise un composé auxiliaire hydrosoluble, solvant du chlorure de vinyle, en quantité telle que la solubilité à 25°C, sous la pression atmosphérique, du chlorure de vinyle dans la phase aqueuse soit au moins égale à 1,5 g/l.

Le composé auxiliaire peut être choisi parmi les alcools et les cétones dont la molécule comporte de 1 à 16 atomes de carbone, tels que notamment l'alcool méthylique, l'alcool éthylique, l'alcool butylique, la diméthylcétone, la méthyléthylcétone.

Le choix du composé auxiliaire à utiliser est fonction de la masse moléculaire du polymère à préparer. Le taux du composé auxiliaire à utiliser, en poids par rapport au(x) monomère(s) mis en oeuvre pour réaliser la première étape, est fonction de sa nature et de la teneur pondérale en eau du milieu réactionnel. Il est d'autant

3

plus élevé, toutes choses égales par ailleurs, que la teneur pondérale en eau est plus élevée. Ce taux est généralement compris entre 1 et 100%. Le choix et le taux du composé auxiliaire sont facilement déterminés par des essais.

Un taux de composé auxiliaire trop élevé conduit à un latex donnant lieu à coagulation ou à la formation de croûtes.

Un taux de composé auxiliaire trop faible conduit aux inconvénients mentionnés ci-dessus à propos de la technique décrite par J. LAAKSONEN et P. STENIUS.

Au début de la première étape du procédé de l'invention la teneur en monomère(s) du milieu réactionnel est généralement comprise entre 1 et 50% et de préférence entre 1 et 30% en poids.

Pour réaliser la première étape du procédé de l'invention le milieu réactionnel est porté et maintenu habituellement sous pression autogène et agitation modérée à température de polymérisation généralement comprise entre 20 et 80°C. On peut faire varier la température de polymérisation pendant la réaction. L'intensité d'agitation est réglée en fonction du diamètre moyen des particules que l'on désire obtenir. Elle est d'autant plus élevée, toutes choses égales par ailleurs, que le diamètre moyen des particules est plus élevé.

Dans le cas où le procédé de l'invention est mis en oeuvre en une seule étape, la réaction est arrêtée après la chute de pression et le ou les monomère(s) non transformé(s) ainsi que le composé auxiliaire sont dégazés par mise sous vide du réacteur.

Dans le cas où le procédé de l'invention est mis en oeuvre en deux étapes, la deuxième étape est réalisée en présence, comme produit d'ensemencement, d'une partie au moins du latex issu de la première étape. Elle peut être réalisée par toute technique connue en soi de polymérisation en émulsion ensemencée.

La demanderesse a en effet trouvé qu'en réalisant, en une deuxième étape, une polymérisation en émulsion ensemencée, en présence, comme produit d'ensemencement, d'une partie au moins du latex issu de la première étape du procédé selon l'invention, et ce par toute technique connue en soi de polymérisation en émulsion ensemencée, il est possible d'obtenir des polymères du chlorure de vinyle sous forme de latex à particules monodispersées de diamètre moyen compris entre 0,5 et 1,2 $\mu$m, lesdits latex étant exempts de particules non sphériques.

Entre les deux étapes de polymérisation le latex, issu de la première étape du procédé de l'invention, peut subir éventuellement une opération de dégazage partiel ou total du ou des monomère(s) non transformé(s) et du composé auxiliaire.

On réalise généralement la deuxième étape du procédé de l'invention en présence d'un amorceur hydrosoluble, éventuellement associé à un réducteur, et d'un émulsifiant anionique, éventuellement associé à un émulsifiant non ionique.

Comme amorceurs hydrosolubles à mettre en oeuvre pour réaliser la deuxième étape du procédé de l'invention on peut citer le peroxyde d'hydrogène, les persulfates des métaux alcalins, le persulfate d'ammonium, les perborates des métaux alcalins, le perborate d'ammonium, l'hydroperoxyde de tertiobutyle, l'azobisisobutyronitrile. Ils sont employés en quantité généralement comprise entre 0,01 et 2%, en poids par rapport au(x) monomère(s) mis en oeuvre au cours de la deuxième étape. Ces amorceurs sont éventuellement associés à un réducteur hydrosoluble tel que, par exemple, le formaldéhyde sulfoxylate de sodium, le sulfite de sodium, le thiosulfate de sodium. Les réducteurs sont employés en quantité généralement comprise entre 0,01 et 0,5%, en poids par rapport au(x) monomère(s) mis en oeuvre au cours de la deuxième étape.

Les émulsifiants anioniques sont de préférence représentés par les savons d'acide gras, les alkylsulfates alcalins, les alkylsulfonates alcalins, les alkylarylsulfonates alcalins, les alkylsulfosuccinates alcalins, les alkylphosphates alcalins et les émulsifiants non ioniques par les polycondensats d'oxyde d'éthylène et/ou de propylène sur divers composés organiques hydroxylés tels que les alcools gras et les nonylphénols. Les émulsifiants sont mis en oeuvre en des proportions généralement comprises entre 0,05 et 3% et de préférence entre 0,1 et 1%, en poids par rapport au(x) monomère(s) mis en oeuvre au cours de la deuxième étape. Lesdits émulsifiants peuvent être mis en oeuvre soit en totalité avant la polymérisation, soit en partie avant la polymérisation, en partie en cours de polymérisation, en continu ou de façon intermittente, et éventuellement en partie après la polymérisation.

La quantité de produit d'ensemencement à mettre en oeuvre pour réaliser la deuxième étape du procédé de l'invention est telle que la quantité de polymère qu'il contient représente généralement 0,3 à 30%, en poids du total polymère plus monomère(s) mis en oeuvre.

Une quantité de polymère d'ensemencement représentant plus de 30% peut être employée mais ne présente que peu d'intérêt, car elle est alors très importante par rapport au(x) monomère(s) et les avantages apportés par la deuxième étape du procédé de l'invention se trouvent minimisés.

Une quantité de polymère d'ensemencement représentant moins de 0,3% est à éviter, car elle risque de provoquer la nucléation de nouvelles particules.

La quantité d'eau à mettre en oeuvre pour réaliser la deuxième étape du procédé de l'invention est telle

EP 0 287 428 B1

que la teneur initiale en polymère d'ensemencement plus monomère(s), compte tenu de la teneur en eau du produit d'ensemencement, est généralement comprise entre 1 et 45%, et de préférence entre 10 et 30%, en poids par rapport au milieu réactionnel.

Le diamètre moyen des particules du latex que l'on désire obtenir, à l'issue de la deuxième étape du procédé de l'invention, est réglé selon les méthodes habituelles propres à la polymérisation en émulsion ensemencée, telles qu'un choix judicieux de la nature de l'émulsifiant utilisé et du diamètre moyen des particules du produit d'ensemencement préparé au cours de la première étape, ainsi que de la proportion, en poids par rapport au(x) monomère(s) à polymériser, dudit émulsifiant et du polymère dudit produit d'ensemencement.

Pour réaliser la deuxième étape du procédé de l'invention le milieu réactionnel est maintenu ou porté et maintenu habituellement sous pression autogène et agitation modérée à température de polymérisation généralement comprise entre 20 et 80°C. Après la chute de pression la réaction est arrêtée et le ou les monomère(s) non transformé(s) ainsi que le composé auxiliaire sont dégazés par mise sous vide du réacteur.

Les polymères du chlorure de vinyle préparés par le procédé de l'invention peuvent, si on le désire, être séparés du milieu de polymérisation par tous procédés connus tels que filtration, ultrafiltration, coagulation-essorage, écaillage, décantation centrifuge, atomisation.

Les polymères objet de l'invention, outre qu'ils sont utilisables, sous forme de latex, dans les applications décrites ci-dessus, sont applicables à la fabrication de feuilles, films, corps creux, matériaux cellulaires, articles moulés par les techniques de calandrage, extrusion, extrusion-soufflage, injection, ainsi qu'à la confection de revêtements enduits et articles moulés par toutes techniques de mise en oeuvre des plastisols et des organosols telles qu'enduction, moulage par rotation, trempage, projection.

On donne ci-après, à titre indicatif et non limitatif, des exemples de réalisation de l'invention.

Les exemples 1 à 6, sont donnés à titre comparatif.

Les exemples 7 à 11 sont selon l'invention.

Selon les exemples 1 à 11 le procédé comporte une étape de polymérisation.

La polymérisation est réalisée dans un réacteur vertical en acier inoxydable de 2 litres de capacité muni d'une double enveloppe à circulation de fluide échangeur de chaleur et d'un agitateur à ancre.

La solubilité à 25°C, sous la pression atmosphérique, du chlorure de vinyle dans la phase aqueuse à examiner est déterminée par chromatographe en phase gazeuse selon la méthode dite "méthode de l'étalonnage externe" décrite dans l'ouvrage intitulé "Manuel Pratique de Chromatographie en Phase Gazeuse" — Jean TRANCHANT — 3ème édition — 1982 — Editions MASSON. Cette méthode est la suivante :

Les solutions étalons sont des solutions de chlorure de vinyle dans du 1,2-dichloroéthane.

La solution à doser est préparée comme suit :

Dans une bouteille aérosol de 150 ml de capacité on introduit 50 g de la phase aqueuse à examiner et, après sertissage de la bouteille, 50 g de chlorure de vinyle. On soumet la bouteille à agitation à 25°C pendant 24 heures puis transfère environ 20 ml de la solution obtenue dans un erlenmeyer de 50 ml de capacité que l'on bouche immédiatement après au moyen d'un septum. Quelques minutes avant le dosage chromatographique on perce le septum à l'aide d'une aiguille.

Le dosage chromatographique est réalisé au moyen de l'appareil, connu sous l'appellation de Sigma BB équipé d'un détecteur FID (Flame Ionization Detection), commercialisé par la Société PERKIN-ELMER. Les conditions opératoires de la mesure sont les suivantes :

— Colonne : tube en acier inoxydable de 3,175 mm (1/8 d'inch) de diamètre et de 2,5 m de longueur,

— Phase stationnaire : produit connu sous l'appellation de "Carbowax 20 M 10% sur Chromosorb WHP 80-100 mesh", fabriqué par John MANVILLE et commercialisé par la Société ALLTECH EUROPE,

— Quantité de solution injectée : 2 μl,

— Température de l'injecteur : 160°C,

— Température du détecteur : 160°C,

— Température du four : 60°C pendant 4 minutes puis élévation de température de 60 à 150°C à raison de 10°C/min,

— Débit du gaz vecteur (azote) : 30 ml/min (volume du gaz rapporté aux conditions normales de température et de pression : 0°C et 101325 Pa),

— Pression d'air : 206840 Pa (30 psig),

— Pression d'hydrogène : 124104 Pa (18 psig).

La teneur pondérale des latex en matière sèche est déterminée par pesée d'un échantillon de quelques grammes desdits latex, avant et après séchage de 2 heures à 80°C.

Le diamètre moyen des particules des latex et le coefficient de polydispersité de leur répartition granulométrique sont déterminés par analyse de la lumière diffusée par lesdits latex à un angle de 90 degrés. La lumière, strictement monochromatique, est produite par un laser. L'intensité de la lumière diffusée est enregistrée en fonction du temps par un photomultiplicateur et analysée par un microordinateur. Le coefficient de polydispersité ainsi déterminé est égal au facteur connu dans la littérature sous le nom de facteur de PUSEY. Dans le cas d'une répartition granulométrique resserrée la valeur du facteur de PUSEY est d'autant plus voisine du carré de l'écart-type de ladite répartition, pris comme mesure, que ladite répartition est plus resserrée. Les mesures sont faites au moyen de tout appareil approprié du type corrélateur de photons et notamment de l'appareil connu industriellement sous l'appellation de MALVERN AUTOSIZER.

La masse moléculaire des polymères du chlorure de vinyle est évaluée par leur indice de viscosité déterminé selon la norme internationale ISO 174 après récupération desdits polymères à l'état pulvérulent sec par séchage d'une partie des latex par atomisation.

Le taux de croûtes formées dans le réacteur lors de la polymérisation est déterminé après vidange et nettoyage dudit réacteur et égal au rapport, exprimé en pourcentage, du poids de croûtes recueillies, déterminé après séchage, au poids du polymère du latex obtenu.

## EXEMPLES 1 à 11

La première étape et, le cas échéant, la deuxième étape de polymérisation sont réalisées selon le mode opératoire suivant :

Après introduction de l'eau dans le réacteur contenant, le cas échéant, le produit d'ensemencement, fermeture et mise sous vide du réacteur, on purge le réacteur par du chlorure de vinyle puis le met à nouveau sous vide. On introduit les autres ingrédients à l'exception du monomère et de l'amorceur de polymérisation et met en marche l'agitateur. On introduit le monomère à polymériser et porte la double enveloppe du réacteur à la température de polymérisation choisie. Une fois la température atteinte on introduit l'amorceur de polymérisation sous pression d'azote et maintient la température jusqu'à ce que la pression dans le réacteur baisse de 2 bars.

Après dégazage du ou des monomère(s) non transformé(s) ainsi que, le cas échéant, du composé auxiliaire on obtient un latex.

Le tableau 1 indique pour chacun des exemples 1 à 11 la nature et la quantité des ingrédients mis en oeuvre.

Le tableau 2 indique pour chacun des exemples 1 à 11 la solubilité à 25°C, sous la pression atmosphérique, du chlorure de vinyle dans la phase aqueuse.

Le tableau 2 indique également pour chacun des exemples 1 à 11 :
— la température de polymérisation,
— la vitesse de rotation de l'agitateur,
— la durée de polymérisation,
— la teneur pondérale en matière sèche du latex obtenu,
— le diamètre moyen des particules du latex obtenu,
— le coefficient de polydispersité de la répartition granulométrique des particules du latex obtenu,
— l'indice de viscosité du polymère obtenu,
— le taux de croûtes.

EP 0 287 428 B1

TABLEAU 1

| | EXEMPLES COMPARATIFS | | | | | | EXEMPLES SELON L'INVENTION | | | | |
|---|---|---|---|---|---|---|---|---|---|---|---|
| | 1 | 2 | 3 | 4 | 5 | 6 | 7 | 8 | 9 | 10 | 11 |
| Eau (g)........... | 930 | 930 | 930 | 1350 | 1350 | 1350 | 1350 | 800 | 1350 | 1350 | 1350 |
| Chlorure de vinyle (g)........ | 400 | 400 | 400 | 150 | 150 | 150 | 158 | 142 | 158 | 158 | 158 |
| Alcool méthylique(g) | - | - | - | - | - | - | 67,5 | 480 | - | - | - |
| Diméthylcétone(g) | - | - | - | - | - | - | - | - | 67,5 | - | - |
| Méthyléthylcétone(g) | - | - | - | - | - | - | - | - | - | 67,5 | 67,5 |
| Acétate de vinyle(g) | - | - | - | - | - | - | - | - | - | - | - |
| Acrylate de butyle (g)........ | - | - | - | - | - | - | - | - | - | - | - |
| Persulfate de potassium (g).... | 0,2 | 0,2 | 0,2 | 3,6 | 3,6 | 3,6 | 0,5 | 0,5 | 0,5 | 0,5 | 0,5 |
| Hydroxyde de sodium (g)........ | 0,24 | 0,24 | 0,24 | - | - | - | - | - | - | - | - |
| Laurate de sodium(g) | 2,8 | - | 2,8 | - | - | - | - | - | - | - | - |
| Versatate de sodium (g)........ | - | 10 | - | - | - | - | - | - | - | - | - |
| Chlorure de potassium (g).... | - | - | - | 4,45 | 4,45 | 4,45 | - | - | - | - | - |

TABLEAU 2

| | EXEMPLES COMPARATIFS | | | | | | | EXEMPLES SELON L'INVENTION | | | |
|---|---|---|---|---|---|---|---|---|---|---|---|
| | 1 | 2 | 3 | 4 | 5 | 6 | 7 | 8 | 9 | 10 | 11 |
| Solubilité du chlorure de vinyle (g/l).... | 1,1 | 1,3 | 1,1 | 1,0 | 1,0 | 1,0 | 2,0 | 16 | 2,7 | 2,4 | 2,4 |
| Température de polymérisation(°C) | 55 | 55 | 55 | 58 | 58 | 65 | 58 | 58 | 58 | 58 | 65 |
| Vitesse de rotation de l'agitateur (tr/min)........ | 150 | 150 | 250 | 110 | 350 | 110 | 110 | 110 | 110 | 110 | 110 |
| Durée de polymérisation (h).... | 7 | 6 | 6,5 | 2 | 0,3 | 1,3 | 5,5 | 8 | 6 | 6 | 4 |
| Teneur pondérale en matière sèche du latex (%).... | 27 | 29 | 28 | 9 | 5 | 8 | 6 | 3 | 7 | 7 | 8 |
| Diamètre moyen des particules du latex (µm)...... | 0,12 | 0,15 | 0,12 | 0,32 | 0,51 | 0,47 | 0,36 | 0,61 | 0,31 | 0,32 | 0,35 |
| Coefficient de polydispersité.. | 0,15 | 0,11 | 0,15 | 0,01 | 0,07 | 0,02 | 0,02 | 0,06 | 0,01 | 0,02 | 0,04 |
| Indice de viscosité (ml/g)...... | 125 | 126 | 124 | 46 | 86 | 40 | 72 | 61 | 70 | 62 | 45 |
| Taux de croûtes(%) | 1 | 0,8 | 3,5 | 7 | 60 | 6 | 3,5 | 4,3 | 3 | 0,8 | 0,8 |

EP 0 287 428 B1

## Revendications

1. Procédé de préparation d'homo- et co-polymères du chlorure de vinyle sous forme d'un latex à particules monodispersées, et plus particulièrement d'un latex à grosses particules, par polymérisation en émulsion aqueuse du ou des monomères correspondants, en une ou deux étapes, selon lequel on réalise la première étape en l'absence d'agent tensioactif et en présence d'au moins 0,2% et de préférence de 0,3 à 1%, en poids par rapport au(x) monomère(s), d'au moins un amorceur hydrosoluble choisi dans le groupe formé par les persulfates des métaux alcalins et le persulfate d'ammonium, caractérisé par le fait que l'on réalise la première étape en présence également d'au moins un composé auxiliaire hydrosoluble, solvant du chlorure de vinyle et non copolymérisable avec le chlorure de vinyl, en quantité telle que la solubilité à 25°C, sous la pression atmosphérique, du chlorure de vinyle dans la phase aqueuse soit au moins égale à 1,5 g/l.

2. Procédé selon la revendication 1, caractérisé par le fait que le composé auxiliaire est choisi parmi les alcools et les cétones dont la molécule comporte de 1 à 16 atomes de carbone.

3. Procédé selon la revendication 2, caractérisé par le fait que le composé auxiliaire est choisi dans le groupe formé par l'alcool méthylique, l'alcool éthylique, l'alcool butylique, la diméthylcétone, la méthyléthylcétone.

4. Procédé selon l'une quelconque des revendications 1 à 3, caractérisé par le fait que le taux du composé auxiliaire à utiliser est compris entre 1 et 100% en poids par rapport aux monomères mis en oeuvre pour réaliser la première étape.

5. Procédé selon l'une quelconque des revendications 1 à 4, caractérisé par le fait qu'au début de la première étape la teneur en monomère(s) du milieu réactionnel est comprise entre 1 et 50% et de préférence entre 1 et 30% en poids.

6. Procédé en deux étapes selon l'une quelconque des revendications 1 à 5, caractérisé par le fait que la deuxième étape est réalisée en présence, comme produit d'ensemencement, d'une partie au moins du latex issu de la première étape.

7. Procédé selon la revendication 6, caractérisé par le fait que la deuxième étape est réalisée en présence d'un amorceur hydrosoluble éventuellement associé à un réducteur et d'un émulsifiant anionique éventuellement associé à un émulsifiant non ionique.

8. Procédé selon l'une quelconque des revendications 6 et 7, caractérisé par le fait que la quantité de produit d'ensemencement à mettre en oeuvre pour réaliser la deuxième étape est telle que la quantité de polymère qu'il contient représente 0,3 à 30%, en poids du total polymère plus monomère(s) mis en oeuvre.

9. Procédé selon l'une quelconque des revendications 6 à 8, caractérisé par le fait que la quantité d'eau à mettre en oeuvre pour réaliser la deuxième étape est telle que la teneur initiale en polymère d'ensemencement plus monomère(s), compte tenu de la teneur en eau du produit d'ensemencement, est comprise entre 1 et 45% et de préférence entre 10 et 30%, en poids par rapport au milieu réactionnel.

## Claims

1. Process for the preparation of vinyl chloride homo- and copolymers in the form of a latex containing monodisperse particles, and more particularly of a latex containing coarse particles, by polymerisation of the corresponding monomer(s) in aqueous emulsion, in one or two stages, according to which the first stage is carried out in the absence of surface-active agent and in the presence of at least 0.2% and preferably from 0.3 to 1%, by weight relative to the monomer(s), of at least one water-soluble initiator chosen from the group consisting of alkali metal persulphates and ammonium persulphate, characterised in that the first stage is carried out also in the presence of at least one water-soluble auxiliary compound, which is a solvent for vinyl chloride and is not copolymerisable with vinyl chloride, in such quantity that the solubility of vinyl chloride in the aqueous phase at 25°C at atmospheric pressure is at least 1.5 g/l.

2. Process according to Claim 1, characterised in that the auxiliary compound is chosen from the alcohols and ketones whose molecule contains from 1 to 16 carbon atoms.

3. Process according to Claim 2, characterised in that the auxiliary compound is chosen from the group consisting of methyl alcohol, ethyl alcohol, butyl alcohol, dimethyl ketone and methyl ethyl ketone.

4. Process according to any one of Claims 1 to 3, characterised in that in that the proportion of the auxiliary compound to be employed is between 1 and 100% by weight relative to the monomers employed to carry out the first stage.

5. Process according to any one of Claims 1 to 4, characterised in that at the beginning of the first stage the monomer(s) content of the reaction mixture is between 1 and 50% and preferably between 1 and 30%.

6. Two-stage process according to any one of Claims 1 to 5, characterised in that the second stage is carried out in the presence of at least a part of the latex originating from the first stage, as seeding product.

7. Process according to Claim 6, characterised in that the second stage is carried out in the presence of a water-soluble initiator in combination, if desired, with a reducing agent and of an anionic emulsifier in combination, if desired, with anonionic emulsifier.

8. Process according to either of Claims 6 and 7, characterised in that the quantity of seeding product to be employed in carrying out the second stage is such that the quantity of polymer which it contains represents 0.3 to 30% by weight of the total polymer plus monomer(s) employed.

9. Process according to any one of Claims 6 to 8, characterised in that the quantity of water to be employed in carrying out the second stage is such that the initial content of seeding polymer plus monomer(s), account being taken of the water content of the seeding product, is between 1 and 45% and preferably between 10 and 30% by weight relative to the reaction mixture.

**Patentansprüche**

1. Verfahren zur Herstellung von Homo- und Copolymeren von Vinylchlorid in Form eines Latex aus monodispersen Teilchen, insbesondere eines Latex von groben Teilchen, durch Polymerisation in wäßriger Emulsion des oder der entsprechenden Monomeren in einer oder zwei Stufen, wobei man die erste Stufe in Abwesenheit eines grenzflächenaktiven Mittels und in Gegenwart von mindestens 0,2 und vorzugsweise 0,3 bis 1 Gew.-%, bezogen auf das/die Monomer(en) mindestens eines wasserlöslichen Initiators, ausgewählt aus der Gruppe bestehend aus den Alkali-persulfaten und Ammonium-persulfat, dadurch gekennzeichnet, daß man die erste Stufe in gleichzeitiger Gegenwart mindestens eines wasserlöslichen Hilfsmittels, das ein Lösungsmittel für Vinylchlorid und mit dem Vinylchlorid nicht copolymerisierbar ist, in einer solchen Menge, daß die Löslichkeit bei 25°C unter Atmosphärendruck von Vinylchlorid in der wäßrigen Phase mindestens 1,5 g/l beträgt, durchführt.

2. Verfahren nach Anspruch 1, dadurch gekennzeichnet, daß das Hilfsmittel ausgewählt ist aus den Alkoholen und Ketonen mit 1 bis 16 Kohlenstoffatomen im Molekül.

3. Verfahren nach Anspruch 2, dadurch gekennzeichnet, daß das Hilfsmittel ausgewählt ist aus der Gruppe Methylalkohol, Ethylalkohol, Butylalkohol, Dimethylketon und Methylethylketon.

4. Verfahren nach einem der Ansprüche 1 bis 3, dadurch gekennzeichnet, daß die angewandte Menge an Hilfsmittel zwischen 1 und 100 Gew.-%, bezogen auf die zur Durchführung der ersten Stufe eingesetzten Monomere, beträgt.

5. Verfahren nach einem der Ansprüche 1 bis 4, dadurch gekennzeichnet, daß zu Beginn der ersten Stufe der Gehalt an Monomer(en) in dem Reaktionsmedium zwischen 1 und 50 und vorzugsweise zwischen 1 und 30 Gew.-% beträgt.

6. Zweistufiges Verfahren nach einem der Ansprüche 1 bis 5, dadurch gekennzeichnet, daß die zweite Stufe durchgeführt wird in Gegenwart mindestens eines Teils des in der ersten Stufe entstandenen Latex als Impfprodukt.

7. Verfahren nach Anspruch 6, dadurch gekennzeichnet, daß die zweite Stufe durchgeführt wird in Gegenwart von einem wasserlöslichen Initiator, gegebenenfalls zusammen mit einem Reduktionsmittel und einem anionischen Emulgiermittels gegebenenfalls zusammen mit einem nichtionischen Emulgiermittel.

8. Verfahren nach einem der Ansprüche 6 oder 7, dadurch gekennzeichnet, daß die zur Durchführung der zweiten Stufe eingesetzte Menge an Impfprodukt so gewählt wird, daß die vorhandene Menge an Polymer 0,3 bis 30 Gew.-%, bezogen auf das gesamte eingesetzte Polymer und das/die Monomer(en), beträgt.

9. Verfahren nach einem der Ansprüche 6 bis 8, dadurch gekennzeichnet, daß die zur Durchführung der zweiten Stufe eingesetzte Menge an Wasser so gewählt wird, daß der Anfangsgehalt an Impfpolymer plus Monomer(e) unter Berücksichtigung des Gehalts an Impfprodukt in Wasser zwischen 1 und 45, vorzugsweise zwischen 10 und 30 Gew.-%, bezogen auf das Reaktionsmedium, beträgt.